# EUROPÄISCHE PATENTANMELDUNG

(11) **EP 0 725 096 A2**
(43) Veröffentlichungstag der Anmeldung: **07.08.1996**
(21) Anmeldenummer: 96101183.0
(22) Anmeldetag: 29.01.1996
(51) Int. Cl.: C08G 8/28, C09D 11/10

(54) **Modifizierte Naturharz-Kohlenwasserstoff-Copolymere**

(30) Priorität: 04.02.1995 DE 19503715
(71) Anmelder: Vianova Resins GmbH, D-55252 Mainz-Kastel (DE)
(72) Erfinder: Wallach, Thomas, Dr., D-65597 Hünfelden (DE); Bothe, Lothar, Dr., D-55124 Mainz (DE)

(57) **Zusammenfassung**

Lagerstabile, strukturviskose Phenolharz-modifizierte Naturharz-Kohlenwasserstoff-Copolymere mit niedriger Polarität und einem Molekulargewicht (M_{w}) von 50.000 bis 250.000, die als Bindemittel in Druckfarben eingesetzt werden können, bestehen im wesentlichen aus
a) 20 bis 80 Gew.-% Naturharz oder Naturharzsäuren,
b) 1 bis 30 Gew.-% Kohlenwasserstoffharzen,
c) 1 bis 25 Gew.-% hydrierten Fettsäuren oder Fettsäureverbindungen,
d) 10 bis 45 Gew.-% einkernigen oder mehrkernigen Phenolen,
e) 1 bis 20 Gew.-% Aldehyden oder Aldehydacetalen,
f) 0,01 bis 2 Gew.-% Metallverbindungen aus den Gruppen Ia und IIa des Periodensystems,
g) 1 bis 20 Gew.-% polyfunktionellen Alkoholen mit drei oder mehr Hydroxylgruppen pro Molekül.

## Beschreibung

Die Erfindung betrifft lagerstabile, strukturviskose, Phenolharz-modifizierte Naturharz-Kohlenwasserstoff-Copolymere mit niedriger Polarität, Verfahren zu deren Herstellung und deren Verwendung als Druckfarbenharze.

Niedrigpolare Druckfarbenharze sind grundsätzlich bekannt. Dabei handelt es sich entweder um Druckfarbenbindemittel auf der Basis von Cyclopentadien oder Dicyclopentadien, die mit Resolen, ungesättigten Carbonsäuren und Veresterungsmittel modifiziert worden sind, oder (vgl. EP-A 0 214 526) um modifizierte Naturharzsäureester, in denen durch Beigabe von unpolaren Kohlenwasserstoffharzen die Anzahl der polaren Gruppen im Harz reduziert worden ist (vgl. DE-A 41 36 316). Ein Nachteil dieser Bindemittelharze ist jedoch, daß sie sich schlecht in Gelfirnisse überführen lassen und diese, vorzugsweise mit Aluminiumverbindungen hergestellten Gelfirnisse, nicht viskositätsstabil sind. Daher verursacht der durch hohe Maschinengeschwindigkeiten bewirkte Temperaturanstieg in der Druckmaschine eine deutliche Viskositätserniedrigung der Druckfarbe, die insbesondere zur unkontrollierten Tackerniedrigung und zur Störung der Farb/Wasser-Balance führt.

In EP-A 0 615 987 werden Druckfarbenharze zum Einstellen einer geringen Polarität mit ungesättigten Fettsäuren oder Fettsäureestern modifiziert. Mit derartigen Produkten hergestellte Firnisse in Mineralöl besitzen jedoch eine unzureichende Lagerstabilität (Vergleichsversuch).

Der vorliegenden Erfindung lag somit die Aufgabe zugrunde, Druckfarbenharze zur Verfügung zu stellen, die eine geringe Polarität und möglichst hohe Strukturviskosität aufweisen und deren Firnisse in Mineralöl ausreichend lagerstabil sind.

Die Aufgabe konnte gelöst werden durch niedrigpolare Phenolharz-modifizierte Naturharz-Kohlenwasserstoff-Copolymere, die in Abwesenheit von α,β-ungesättigten Carbonsäuren und deren Anhydriden unter Zusatz von hydrierten Fettsäuren oder Fettsäureverbindungen erhalten werden können.

Gegenstand der Erfindung ist ein lagerstabiles, strukturviskoses, Phenolharzmodifiziertes Naturharz-Kohlenwasserstoff-Copolymeres mit einem gewichtsmittleren Molekulargewicht (M_{w}) von 50.000 bis 250.000, das im wesentlichen aus
a) 20 bis 80 Gew.-% Naturharz oder Naturharzsäuren,
b) 1 bis 30 Gew.-% Kohlenwasserstoffharzen,
c) 1 bis 25 Gew.-% hydrierten Fettsäuren oder Fettsäureverbindungen,
d) 10 bis 45 Gew.-% einkernigen oder mehrkernigen Phenolen,
e) 1 bis 20 Gew.-% Aldehyden oder Aldehydacetalen,
f) 0,01 bis 2 Gew.-% Metallverbindungen aus den Gruppen Ia und IIa des Periodensystems,
g) 1 bis 20 Gew.-% polyfunktionellen Alkoholen mit drei oder mehr Hydroxylgruppen pro Molekül besteht
und das in Mineralöl (Siedebereich 240 - 270 °C, Anilinpunkt 72 °C, gemessen nach DIN 51 775) eine Viskosität von > 20 dPas ( 35 Gew.-%ige Lösung, 23 °C, Schergeschwindigkeit 50 s⁻¹) besitzt und eine Ethanolzahl von < 70 ml aufweist, gemessen als Volumenmenge Ethanol, die zugesetzt zu einer Lösung von 5 g Naturharz-Kohlenwasserstoff-Copolymeres in 50 g Toluol bei Raumtemperatur eine Trübung verursacht.

Die für die Komponenten a) bis g) genannten Anteile beziehen sich immer auf die Summe aller Komponenten, die stets 100 Gew.-% beträgt. Durch Variation der Komponentenanteile lassen sich der Schmelzpunkt, die Verträglichkeit, die Viskosität und die Polarität des Endproduktes auf den gewünschten Werte abstimmen.

Geeignete Naturharze oder Naturharzsäuren a) sind beispielsweise Kolophonium (Baumharz), Tallharz, Wurzelharz oder teilweise hydrierte, disproportionierte sowie dimerisierte Naturharze. Die erfindungsgemäßen Copolymere enthalten die Komponente a) in einem Anteil von vorzugsweise 25 bis 75 Gew.-%, insbesondere 30 bis 55 Gew.-%.

Als Kohlenwasserstoffharz b) finden vorzugsweise Polymerisate oder Copolymerisate aus Cyclopentadien, Dicyclopentadien, Cumaron, Inden, Styrol sowie anderen Verbindungen, die beim Cracken von Erdölfraktionen erhalten werden, Verwendung. Der Anteil der Komponente b) in den Copolymeren beträgt vorzugsweise 3 bis 25 Gew.-%, insbesondere 5 bis 20 Gew.-%.

Geeignete Fettsäuren oder Fettsäureverbindungen c) sind vorzugsweise gesättigte (C₈-C₁₈)-Fettsäuren sowie die hydrierten Produkte von einfach oder mehrfach ungesättigten (C₈-C₁₈)-Fettsäuren, deren Dimere oder Gemische aus diesen. Bevorzugt werden Ester von gesättigten Fettsäuren, insbesondere hydriertes Kokosfett, hydriertes Palmkernfett, hydrierte Kakaobutter, hydriertes Ricinusöl verwendet. Die Komponente c) liegt in den Copolymeren in einem Anteil von vorzugsweise 2 bis 25 Gew.-%, insbesondere 5 bis 20 Gew.-%, vor.

Die Phenolkomponente d) besteht aus einkernigen oder mehrkernigen Phenolen. Es können beispielsweise Phenol, verschiedene Kresole, Butylphenol, Amylphenol, Nonylphenol, Octylphenol, Phenylphenol und Bisphenole verwendet werden, vorzugsweise werden Mischungen aus Phenolen eingesetzt, die gegenüber Oxoverbindungen di- und höherfunktionell sind, besonders bevorzugt Mischungen aus Nonylphenol und Bisphenol A. Durch den relativen Anteil dieser beiden Phenolkomponenten lassen sich sowohl die Viskosität als auch die Struktur der Harze in Lösung in einfacher, vorteilhafter Weise einstellen. Der bevorzugte Anteil der Komponente d) beträgt in den Copolymeren vorzugsweise 15 bis 40 Gew.-%, insbesondere 20 bis 35 Gew.-%.

Als Aldehyd- oder Aldehydacetalkomponente e) werden vorzugsweise die Aldehyde und Aldehydacetale eingesetzt, die üblicherweise zur Resol- bzw. Novolakherstellung verwendet werden. Insbesondere wird Formaldehyd in wäßriger Lösung oder in oligomerer oder polymerer Form verwendet, besonders bevorzugt ist Paraformaldehyd. Die Komponente e) ist in den Copolymeren vorzugsweise in einem Anteil von 2 bis 15 Gew.-%, insbesondere 3 bis 12 Gew.-%, enthalten.

Geeignete Metallverbindungen f) aus den Gruppen Ia und IIa des Periodensystems sind beispielsweise Metalloxide und -hydroxide oder Carbonsäuresalze dieser Metalle. Besonders bevorzugt werden Magnesiumsalze, insbesondere Magnesiumoxid. Die Metallverbindung f) liegt in den Copolymeren in einem Anteil von vorzugsweise 0,02 bis 1,5 Gew.-%, insbesondere 0,04 bis 1,3 Gew.-%, vor.

Als polyfunktionelle Alkoholkomponente g) können alle mehrwertigen Alkohole verwendet werden, die drei oder mehr Hydroxylgruppen pro Molekül enthalten, beispielsweise Glycerin, Trimethylolpropan, Trimethylolethan, 1,2,6- Hexantriol, Pentaerythrit, Di - und Polypentaerythrit. Vorzugsweise werden trifunktionelle Alkohole verwendet, insbesondere Glycerin. Die Komponente g) ist in den Copolymeren vorzugsweise in einem Anteil von 2 bis 18 Gew.-%, insbesondere von 3 bis 10 Gew.-%, enthalten.

Die gewichtsmittleren Molekulargewichte (M_{w}) der erfindungsgemäßen Phenolharz-modifizierten Naturharz-Kohlenwasserstoff-Copolymere liegenvorzugsweise in einem Bereich von 70.000 bis 150.000.

Gegenstand der Erfindung ist auch ein Verfahren zur Herstellung eines strukturviskosen, niedrigpolaren, Phenolharz-modifizierten Naturharz-KohlenwasserstoffCopolymeren, bei dem die Komponenten a) bis g) in Lösung oder vorzugsweise in Substanz bei einer Temperatur von 80 bis 300 °C, vorzugsweise 90 bis 280 °C umgesetzt werden. Dazu wird entweder die gesamte Mischung aus allen eingesetzten Komponenten zur Reaktion gebracht, oder einzelne Komponenten werden vorgelegt und die übrigen durch Zudosierung damit umgesetzt.

Vorzugsweise wird unter einer Schutzgasatmosphäre
1) die Komponente f) bei einer Temperatur zwischen 100 und 250 °C, vorzugsweise 110 bis 150 °C, mit der schmelzflüssigen Mischung aus den Komponenten a) bis d) und g) vermischt,
2) die Komponente e) bei der gleichen Temperatur eintragen und unter Resolbildung, vorzugsweise unter einem Druck zwischen 1 und 10 bar, insbesondere 1 bis 5 bar, umgesetzt,
3) ein zur azeotropen Destillation von Wasser befähigtes Schleppmittel zugesetzt und bei Temperaturen zwischen 200 und 280 °C, vorzugsweise zwischen 210 und 270 °C, eine kontinuierliche azeotrope Destillation durchgeführt, in der das entstehende Reaktionswasser vorzugsweise über einen Wasserabscheider abgetrennt und das Schleppmittel dem Reaktionsgemisch wieder zugeführt wird, bis das entstandene Harz in Mineralöl die gewünschte Viskosität aufweist,
4) anschließend das Schleppmittel durch Destillation unter Vakuum bei Drücken zwischen 1000 und 0,1 mbar, vorzugsweise 300 bis 50 mbar, entfernt und
5) das Harz auf Raumtemperatur abgekühlt.

In der Stufe 3) der erfindungsgemäßen Herstellung der Harze finden aliphatische oder aromatische Kohlenwasserstoffe Verwendung, die unter den Umsetzungsbedingungen Azeotrope mit Wasser bilden können, beispielsweise Hexan, Dekan, Benzine oder Mineralölfraktionen, vorzugsweise jedoch Toluol oder Xylol. Das Schleppmittel kann in der Stufe 3) des erfindungsgemäßen Verfahrens submers über ein Einleitungsrohr der Reaktionsmischung zugegeben werde, vorzugsweise jedoch erfolgt die Zugabe des Schleppmittels in der Stufe 1) des Herstellverfahrens, um die Schmelzviskosität der Umsetzungsprodukte während der Herstellung zu erniedrigen und die Harzschmelze vor lokalen Überhitzungen an der Reaktorwand zu schützen.

Bei dem erfindungsgemäßen Herstellverfahren wird der Fortgang der Reaktion in der Verfahrensstufe 3) durch Viskositätsmessungen verfolgt, bis das entstandene Harz die gewünschte Viskosität in einem Mineralöl erreicht hat. Danach wird das Schleppmittel durch Destillation unter Vakuum entfernt.

Bei der erfindungsgemäßen Herstellung der Harze wird überraschenderweise während der azeotropen Destillation eine kontinuierliche Erniedrigung der Lösungsviskosität des Reaktionsproduktes beobachtet. Die Geschwindigkeit dieser Viskositätsabnahme kann durch die gewählte Reaktionstemperatur beeinflußt werden, wobei eine höhere Reaktionstemperatur eine schnellere Viskositätsabnahme des Harzes in Lösung bewirkt. Gegenüber dem Stand der Technik, bei dem die Lösungsviskosität des Harzes zum Ende der Reaktion durch Veresterung der Alkoholkomponenten mit dem im Harz vorhandenen Säuregruppen steigt, kann bei dem oben beschriebenen Verfahren durch die richtige Wahl der Reaktionstemperatur sowohl die Raum/Zeit-Ausbeute erhöht als auch die Qualitätskonstanz der Produkte verbessert werden.

Die Strukturviskosität der in Mineralöl gelösten erfindungsgemäßen Harze kann durch rheologische Messungen ermittelt werden. Ein Maß für diese ist der Strukturindex, der durch Quotientenbildung zweier, bei unterschiedlichen Schergeschwindigkeiten bestimmter, Scherviskositäten gebildet wird. Harzfirnisse ohne pseudoplastisches Fließverhalten weisen dabei einen Strukturindex von 1, strukturviskose Harzfirnisse weisen einen von größer als 1 auf.

Zur Bestimmung des Strukturindexes werden die erfindungsgemäßen Phenolharz-modifizierten Naturharz-Kohlenwasserstoff-Copolymere in Firnisse überführt, indem man sie während 30 Minuten bei 180 °C im Gewichtsverhältnis Harz:Mineralöl = 35:65 mit einem Mineralöl verrührt, wobei das Mineralöl einen Siedebereich von 240 bis 270 °C besitzt und einen Anilinpunkt von 72 °C aufweist, den Firnis auf Raumtemperatur abkühlt und die Viskosität der Harzlösung mit einem Rotationsviskosimeter mit Kegel-Platte-Meßeinrichtung (Rotationsviskosimeter RV 20 mit Meßantrieb M 5 der Fa. Haake, Schergeschwindigkeit 0 bis 100 s⁻¹, Meßtemperatur 23 °C, Meßzeit 1 Minuten) bestimmt. Der Strukturindex errechnet sich dann aus dem Quotienten der ermittelten Scherviskositäten bei einer Schergeschwindigkeit von 10 s⁻¹ und 50 s⁻¹.

Die erfindungsgemäßen Phenolharz-modifizierten Naturharz-Kohlenwasserstoff-Copolymeren, die nach dem vorstehend beschriebenen erfindungsgemäßen Verfahren erhalten werden, liefern bei Messungen ihrer 35 Gew.-%igen Lösungen in Mineralöl (Siedebereich 240 bis 270 °C, Anilinpunkt 72 °C) im Rotationsviskosimeter bei 23 °C bei Schergeschwindigkeiten von 0 bis 100 s⁻¹ Strukturindices von > 1,5, vorzugsweise > 2, insbesondere > 2,5.

Zur Ermittlung der Polarität der erfindungsgemäßen Phenolharz-modifizierten Naturharz-Kohlenwasserstoff-Copolymere werden diese jeweils bei Raumtemperatur im Gewichtsverhältnis Harz:Toluol = 5 g: 50 g gelöst und unter Rühren mit Ethanol bis zum Auftreten einer Trübung titriert. Die verbrauchte Menge an Ethanol in ml wird als Ethanolzahl bezeichnet und stellt ein Maß für die Polarität des Harzes dar. Die erfindungsgemäßen Phenolharz-modifizierte Naturharz-Kohlenwasserstoff-Copolymere weisen eine Ethanolzahl von vorzugsweise < 50 ml, insbesondere < 40 ml, auf.

Die erfindungsgemäßen Reaktionsprodukte weisen gute Verträglichkeit mit Alkydharzen und mit Lösungsmitteln wie Mineralölen und trocknenden Ölen auf. Besonders überraschend ist ihre ausgezeichnete Lagerstabilität, die vorzugsweise mehr als 6 Monate beträgt.

Gegenstand der vorliegenden Erfindung ist auch die Verwendung der erfindungsgemäßen Phenolharz-modifizierten Naturharz-Kohlenwasserstoff-Copolymere als Bindemittel für Druckfarben, insbesondere für Offsetdruck und Buchdruck. Hierbei treten der hohe Glanz, die rasche Trocknung, die rasche Lösungsmittelabgabe sowie die gute Gelierung mit Aluminiumverbindungen als besonders günstige Eigenschaften hervor. Die aus den erfindungsgemäßen Harzen hergestellten Druckfarben für den Offsetdruck und den Buchdruck sind darüber hinaus gegenüber den in den Druckmaschinen auftretenden Temperaturschwankungen weitgehend unempfindlich und weisen eine vorteilhaft stabile Farb/Wasser-Balance auf.

Die Erfindung wird in den folgenden Beispielen beschrieben.

### Beispiel 1

In einem 2 l Mehrhalskolben, versehen mit Einleitungsrohr, Wasserabscheider mit Rückflußkühler, Thermometer und Rührer werden unter Inertgas 503 g handelsübliches Kolophonium, 150 g Cyclopentadienharz (®Escorez 8190), 253 g Nonylphenol, 46 g Bisphenol A, 60 g Glycerin und 100 g hydriertes Kokosfett zu einer homogenen Mischung aufgeschmolzen. Bei einer Temperatur von 110 °C werden dieser Mischung 7,5 g Magnesiumoxid und 84 g Paraformaldehyd hinzugegeben. Die Mischung wird 1 Stunde bei 110 °C gerührt, danach wird das Reaktionsgut auf 240 °C erwärmt und der Reaktionsmischung insgesamt 250 ml Schleppmittel über das Einleitungsrohr hinzugegeben. Das sich im Laufe der Reaktion bildende Reaktionswasser wird über den Wasserabscheider entfernt. Nach Erreichen von 240 °C werden in Abständen von 1 Stunde Proben entnommen und die Viskosität der Harzschmelze bestimmt. Dazu werden die Harze in Firnisse überführt, indem man sie während 30 Minuten bei 180 °C im Gewichtsverhältnis Harz:Mineralöl = 35:65 mit einem Mineralöl (PKWF 4/7, Haltermann) verrührt, den Firnis auf Raumtemperatur abkühlt und die Viskosität der Harzlösung mit einem Rotationsviskosimeter mit Kegel-Platte-Meßeinrichtung (Rotationsviskosimeter RV 20 mit Meßantrieb M 5 der Fa. Haake, Schergeschwindigkeit 0 bis 100 s⁻¹, Meßtemperatur 23 °C, Meßzeit 1 Minuten) bestimmt. Nach 5 Stunden Reaktionszeit bzw. bei Erreichen der Firnisviskosität von 850 dPa·s bei einer Schergeschwindigkeit von 50 s⁻¹ wird das Schleppmittel unter Vakuum bei 100 mbar entfernt und das Reaktionsgemisch auf Raumtemperatur abgekühlt. Es wird ein klares Harzes erhalten, welches einen Schmelzpunkt von 120 °C, eine Ethanolzahl von 37 ml und einen Strukturindex in standardisiertem Mineralöl (PKWF 4/7) von 3,6 aufweist. Das gewichtsmittlere Molekulargewicht M_{w} des Harzes beträgt 95000.

### Vergleichsbeispiel 1

Es wird gearbeitet wie in Beispiel 1 mit der Änderung, daß statt eines Kohlenwasserstoffharzes ein mit Naturharz modifiziertes Cyclopentadienharz und statt hydriertem Kokosfett nicht hydriertes Kokosfett eingesetzt wird. Das resultierende Harz weist einen Schmelzpunkt von 115 °C, eine Ethanolzahl von 71 ml, einen Strukturindex in Mineralöl (PKWF 4/7) von 1,3 und ein M_{w} von 26.000 g/mol auf.

### Beispiel 2

In einem 300 l Rührautoklaven werden unter Inertgas 81 kg handelsübliches Kolophonium, 24 kg Kohlenwasserstoffharz (®Escorez 8190), 16 kg hydriertes Kokosfett, 40 kg Nonylphenol, 8 kg Bisphenol A, 9,5 kg Glycerin und 6 kg Xylol zu einer homogenen Mischung aufgeschmolzen. Dieser Mischung werden bei einer Temperatur von 110 °C 1,2 kg Magnesiumoxid und 13,4 kg Paraformaldehyd hinzugegeben und anschließend 1 Stunde bei konstanter Temperatur gerührt. Danach wird das Reaktionsgut auf 260 °C erwärmt und das sich bildende Reaktionswasser mittels Azeotropdestillation entfernt. Der Fortgang der Reaktion wird entsprechendem Beispiel 1 durch Bestimmung der Firnisviskosität des Harzes ermittelt. Nach einer Reaktionszeit von 3 Stunden nach dem Erreichen der Reaktionstemperatur von 260 °C wird das Schleppmittel zuerst unter Normaldruck abdestilliert und dann die verbleibenden Lösungsmittelreste durch Anlegen von Vakuum entfernt. Das erhaltende Harz weist einen Schmelzpunkt von 130 °C, eine Ethanolzahl von 38 ml, einen Strukturindex in Mineralöl (PKWF 4/7) von 2,1 und ein M_{w} von 74000 auf.

### Beispiel 3

In einem heizbaren Rührgefäß werden unter Inertgas 45,0 g des in Beispiel 1 hergestellten Harzes in 45,0 g Mineralöl, dessen Siedebereich bei 240 bis 270 °C liegt, und 10,0 g Alkydharz (®Alftalat AL 766, Hoechst) bei 180 °C gelöst, die Lösung 30 Minuten bei 180 °C gerührt und anschließend auf Raumtemperatur abgekühlt. 72,0 g dieses Firnisses werden mit 28,0 g ®Permanentrubin (Rotpigment, Hoechst) auf einem Dreiwalzenstuhl zu einer Pigmentpaste dispergiert. Von dieser Pigmentpaste werden 64,3 g mit 31,7 g des zuvor hergestellten Firnisses zu einer Offsetfarbe vermischt. Diese zeigt sowohl beim Offsetdruck als auch beim Buchdruck ein sehr gutes Druckverhalten. Die Offsetfarbe zeichnet sich durch eine stabile Farb/Wasser-Balance, ein sehr gutes Farbübertragungsvermögen und eine Gelstruktur, die gegenüber Temperaturschwankungen innerhalb des Temperaturschwankungsbereiches unempfindlich ist, aus.

### Lagerstabilität

Die Lagerstabilität des gemäß Vergleichsbeispiel 1 erhaltenen Harzes ist schlecht. Bei Raumtemperatur beträgt die Lagerstabilität lediglich 9 Wochen. Nach dieser Lagerzeit weisen die unter Einsatz des Harzes hergestellten Firnisse in Mineralöl (PKWF 4/7) und/oder Leinöl einen starken Gehalt an unerwünschten Gelteilchen auf.

Entsprechende Firnisse der Harze aus den Beispielen 1 und 2 in Mineralöl (PKWF 4/7) zeigen auch nach einer Lagerzeit von 6 Monaten keine Gelteilchen.

## Patentansprüche

1. Lagerstabiles, strukturviskoses Phenolharz-modifiziertes Naturharz-Kohlenwasserstoff-Copolymeres mit einem gewichtsmittleren Molekulargewicht (M_{w}) von 50.000 bis 250.000, das im wesentlichen aus
a) 20 bis 80 Gew.-% Naturharz oder Naturharzsäuren,
b) 1 bis 30 Gew.-% Kohlenwasserstoffharzen,
c) 1 bis 25 Gew.-% hydrierten Fettsäuren oder Fettsäureverbindungen,
d) 10 bis 45 Gew.-% einkernigen oder mehrkernigen Phenolen,
e) 1 bis 20 Gew.-% Aldehyden oder Aldehydacetalen,
f) 0,01 bis 2 Gew.-% Metallverbindungen aus den Gruppen Ia und IIa des Periodensystems,
g) 1 bis 20 Gew.-% polyfunktionellen Alkoholen mit drei oder mehr Hydroxylgruppen pro Molekül besteht
und das in Mineralöl (Siedebereich 240 - 270 °C, Anilinpunkt 72 °C) eine Viskosität von > 20 dPa·s (35 Gew.-%ige Lösung, 23 °C, Schergeschwindigkeit 50 s⁻ ¹) besitzt und eine Ethanolzahl von < 70 ml aufweist, gemessen als Volumenmenge Ethanol, die zugesetzt zu einer Lösung von 5 g Naturharz-Kohlenwasserstoff-Copolymeres in 50 g Toluol bei Raumtemperatur eine Trübung verursacht.

2. Phenolharz-modifiziertes Naturharz-Kohlenwasserstoff-Copolymeres nach Anspruch 1, dadurch gekennzeichnet, daß die Komponente c) eine gesättigte (C₈-C₁₈)-Fettsäure ist.

3. Phenolharz-modifiziertes Naturharz-Kohlenwasserstoff-Copolymeres nach Anspruch 1, dadurch gekennzeichnet, daß die Komponente c) hydriertes Kokosfett ist.

4. Phenolharz-modifiziertes Naturharz-Kohlenwasserstoff-Copolymeres nach Anspruch 1, dadurch gekennzeichnet, daß die Ethanolzahl < 50 ml beträgt.

5. Verfahren zur Herstellung eines Phenolharz-modifizierten Naturharz-Kohlenwasserstoff-Copolymeren nach Anspruch 1, dadurch gekennzeichnet, daß
1) die Komponente f) bei einer Temperatur zwischen 100 und 250 °C mit der schmelzflüssigen Mischung aus den Komponenten a) bis d) und g) vermischt wird,
2) die Komponente e) bei der gleichen Temperatur eingetragen und unter Resolbildung umgesetzt wird,
3) ein zur azeotropen Destillation von Wasser befähigtes Schleppmittel zugesetzt wird und bei Temperaturen zwischen 200 und 280 °C eine kontinuierliche azeotrope Destillation durchgeführt wird, in der das entstehende Reaktionswasser abgetrennt und das Schleppmittel dem Reaktionsgemisch wieder zugeführt wird, bis das entstandene Harz in einem Mineralöl die gewünschte Viskosität aufweist,
4) anschließend das Schleppmittel durch Destillation unter Vakuum bei Drücken zwischen 1000 und 0,1 mbar, entfernt wird und
5) das Harz auf Raumtemperatur abgekühlt wird.

6. Verwendung des Phenolharz-modifizierten Naturharz-KohlenwasserstoffCopolymeren nach Anspruch 1 als Bindemittelharz in Druckfarben.
